# FASCICULE DE BREVET EUROPEEN

(11) **EP 4 257 467 B1**
(45) Date de publication et mention de la délivrance du brevet: **10.12.2025**
(21) Numéro de dépôt: 23166625.6
(22) Date de dépôt: 04.04.2023
(51) Int. Cl.: B62K 7/02, B62K 5/10, B62K 5/06, B62J 9/23, B62J 9/27, B62J 9/28, B62J 7/04, B60G 3/14, B62K 5/00, B62M 6/40, B62B 1/12, B62B 5/00

(54) **ENSEMBLE COMPRENANT UN VÉHICULE TEL QU'UN CYCLE COMPRENANT UN TRAIN ARRIÈRE PRÉSENTANT UN SYSTÈME STABILISATEUR SANS ESSIEU, ET UN DISPOSITIF PORTE-CHARGE, AMOVIBLE**
ANORDNUNG MIT EINEM FAHRZEUG WIE EINEM FAHRRAD, MIT EINER HINTERRADACHSE MIT EINEM ACHSLOSEN STABILISATORSYSTEM, UND EINER ABNEHMBAREN LASTENTRÄGERVORRICHTUNG
ASSEMBLY COMPRISING A VEHICLE SUCH AS A CYCLE COMPRISING A REAR AXLE HAVING AN AXLE-FREE STABILISER SYSTEM, AND A REMOVABLE LOAD-BEARING DEVICE

(30) Priorité: 07.04.2022 FR 2203220
(43) Date de publication de la demande: 11.10.2023
(73) Titulaire: Deberghes, Pierre, 59120 Loos (FR)
(72) Inventeur: Deberghes, Pierre, 59120 Loos (FR)
(74) Mandataire: Plasseraud IP

(56) Documents cités:
- EP-A2- 0 047 706
- DE-A1- 102013 011 496
- FR-A1- 3 084 330
- FR-A1- 3 109 362
- US-A1- 2020 307 733

## Description

La présente divulgation est relative à un ensemble comprenant un véhicule prenant la forme d'un cycle et un dispositif porte-charge, monté amovible sur un châssis du véhicule. La présente divulgation concerne encore un procédé de livraison mettant en œuvre un tel ensemble.

### Domaine technique

La présente divulgation relève du domaine des véhicules légers, cycles, en particulier des tricycles, en particulier à triporteur, de préférence à assistance électrique, voire électrique.

### Technique antérieure

Il est connu de l'état de la technique en particulier du document FR 3 084 330, ou encore du document FR 3109362 du présent inventeur, ou encore du document DE 10 2013 011496, un tricycle comprenant un châssis comprenant un poste de pilotage pour un utilisateur, le châssis équipé à l'avant d'un train avant comprenant une roue directionnelle, et d'un train arrière comprenant un système stabilisateur comprenant deux bras consistant en un premier bras et un deuxième bras solidaires d'une partie arrière du châssis, les deux bras s'étendant parallèles entre eux, au moins lorsque le véhicule avance en ligne droite sur une surface horizontale, en porte faux arrière sur la partie arrière du châssis.

Les deux bras, consistant en un premier et un deuxième bras, sont articulés à leur extrémité proximale au châssis, suivant un axe transversal, le premier bras présentant une première roue arrière à son extrémité distale, et le deuxième bras présentant une seconde roue arrière à son extrémité distale.

Les articulations entre les bras et le châssis permettent d'assurer la suspension du véhicule, le châssis formant une partie suspendue du véhicule, ledit système de suspension comprenant les deux bras ainsi que des amortisseurs reliant respectivement les deux bras au châssis.

Les articulations permettent également d'incliner le tricycle dans les virages, à savoir que le système stabilisateur est pendulaire, le premier bras et le deuxième bras étant configurés pour être articulés au châssis de manière à permettre l'inclinaison du châssis dans les virages.

Les documents FR 3 084 330, ou encore FR 3109362, ou encore DE 10 2013 011496, enseignent encore de libérer l'espace entre les deux bras, en ce sens que le système stabilisateur est dépourvu d'essieu arrière entre les roues arrière portées par les bras, ou encore est dépourvu d'un élément de transmission entre les bras. La transmission entre le pédalier monté sur le châssis et les roues arrière, à savoir première roue et deuxième roue, est intégrée le long des bras.

Une telle configuration permet avantageusement de prévoir un dispositif porte-charge entre les deux bras, en partie entre les deux roues avec un centre de gravité de chargement abaissé, et par comparaison à des tricycles comportant un tel stabilisateur qui prévoit le dispositif porte-charge au-dessus des bras.

En particulier, dans le document FR 3 084 330, et tel que visible aux figures de ce document, le dispositif porte-charge est constitué par une partie du châssis, qui se prolonge en arrière du poste de pilotage entre les deux bras sur l'arrière du châssis, et qui est donc indémontable.

Dans le document DE 10 2013 011496, un chariot au sol peut être chargé entre les roues arrière par rotation du chariot autour d'un axe de pivot, parallèle à l'axe s'étendant entre les roues arrière. Le document DE 10 2013 011496 divulgue un ensemble selon le préambule de la revendication 1.

Le document FR 3 109 362 enseigne encore un dispositif porte-charge, articulé au châssis qui vient en appui sur un lien souple reliant les deux bras, et un système d'entretoisement des bras. Le dispositif porte-charge et le lien souple sont configurés pour coopérer entre eux avec un report de la charge dudit dispositif porte-charge sur ledit au moins un lien souple de sorte que ledit au moins un lien souple assure un effort de traction entre le premier bras et le deuxième bras corrélé à la charge dudit dispositif porte-charge, l'effort de traction tendant au rapprochement des deux bras qui est équilibré par un effort contraire dû à l'entretoisement des deux bras par un système d'entretoisement.

Dans le document FR 3109362, le dispositif porte-charge fait partie intégrante du mécanisme du système stabilisateur de sorte que le dispositif porte-charge ne peut être ôté.

Les cycles selon les documents FR 3 084 330, FR 3 109 362 et DE 10 2013 011496 présentent avantageusement un plancher de chargement bas entre les roues arrière portées par les bras, ce qui est un avantage en dynamique pour le comportement du véhicule, en particulier dans les virages.

Selon les constatations de l'inventeur, un tel plancher de chargement, bas, peut toutefois ne pas faciliter le chargement, en raison des obstacles que constituent les roues arrière, lors d'un chargement latéral.

Plus généralement, selon les constations de l'inventeur, il existe depuis longtemps un besoin pour un véhicule répondant à plusieurs besoins, et de manière rapide et simple pour l'utilisateur, à savoir en particulier pour le transport de biens et/ou de personnes.

Selon les constatations de l'inventeur, le chargement de tels véhicules avec des produits immobilise les véhicules lors des livraisons le temps du chargement, périodes d'immobilisation pendant lesquelles les livreurs ne sont pas productifs. De tels problèmes d'immobilisation peuvent générer des désagréments tels que des embouteillages. Il existe depuis longtemps des véhicules de transport léger qui permettent la mise en œuvre de livraisons plus efficientes, et en permettant aux livreurs d'effectuer un plus grand nombre de courses.

### Résumé

La présente divulgation vient améliorer la situation.

Il est proposé un ensemble comprenant un véhicule et un dispositif porte-charge, monté amovible sur un châssis du véhicule et dans lequel ledit véhicule est un cycle et comprend :
- ledit châssis comprenant une partie avant et une partie arrière, selon une direction d'avance du véhicule,
- un train avant comprenant une roue avant directionnelle, articulée sur la partie avant du châssis
- un train arrière comprenant un système stabilisateur comprenant deux bras consistant en un premier bras et un deuxième bras, solidaires de la partie arrière du châssis, les deux bras s'étendant parallèles entre eux au moins lorsque le véhicule avance en ligne droite sur une surface horizontale, en porte à faux arrière sur la partie arrière du châssis,

et dans lequel le premier bras présente une extrémité proximale fixée au châssis, et une extrémité distale à laquelle est articulée une première roue arrière, et dans lequel le deuxième bras présente une extrémité proximale fixée au châssis, et une extrémité distale au niveau de laquelle est articulée une deuxième roue arrière,
et dans lequel le système stabilisateur est dépourvu d'essieu entre la première roue arrière et la deuxième roue arrière, le premier bras et le deuxième bras libérant un espace libre entre le premier bras et le deuxième bras, configuré pour recevoir le dispositif porte-charge,
et dans lequel ledit dispositif porte-charge comprend une structure autoportante et dans lequel ledit ensemble comprend un système de couplage, amovible, comprenant une première partie de couplage du véhicule, attenante au châssis du véhicule et une deuxième partie de couplage du dispositif porte-charge solidaire de la structure du dispositif porte-charge, la première partie de couplage et la deuxième partie de couplage étant configurées pour être assemblés, dans une position de couplage du système de couplage pour assurer la fixation du dispositif porte-charge au châssis du véhicule dans une position où la structure autoportante du dispositif porte-charge s'étend en porte à faux arrière du châssis, au moins partiellement dans l'espace libre entre les deux bras consistant en le premier bras et le deuxième bras, entre la première roue arrière et la deuxième roue arrière, avec reprise de la charge du dispositif porte-charge par le châssis du véhicule,
et dans lequel la première partie de couplage et la deuxième partie de couplage sont configurées pour être désassemblées dans une position découplée pour autoriser le retrait du dispositif porte-charge du véhicule,
et dans lequel la première partie de couplage et la deuxième partie de couplage forment dans la position de couplage, une liaison pivot selon un axe articulation entre le châssis et le dispositif porte-charge, qui est parallèle à l'axe d'articulation des roues arrière au moins lorsque le véhicule avance en ligne droite sur une surface horizontale, axe d'articulation autour duquel le dispositif porte-charge est configuré pour pivoter par rapport au châssis.

Selon la présente divulgation, l'axe d'articulation entre le châssis et le dispositif porte-charge est agencé au-dessus du niveau des extrémités proximales des deux bras, consistant en le premier bras et le deuxième bras de sorte que la dispositif porte-charge soit contraint par la gravité, en rotation autour de l'axe de articulation suivant un premier sens jusqu'à une position de mise en butée d'une portion inférieure de la structure autoportante du dispositif porte-charge contre une surface de butée du châssis du véhicule, ladite surface de butée étant positionnée agencée en dessous de l'axe d'articulation sur le châssis.

Les caractéristiques exposées dans les paragraphes suivants peuvent, optionnellement, être mises en œuvre. Elles peuvent être mises en œuvre indépendamment les unes des autres ou en combinaison les unes avec les autres :

Selon un mode de réalisation, la première partie de couplage comprend un premier orifice et la deuxième partie de couplage comprend un deuxième orifice, et dans lequel le premier orifice et le deuxième orifice sont configurés pour être alignés et verrouillés par un axe de verrouillage du système de couplage, amovible, s'étendant suivant l'axe d'articulation, traversant simultanément le premier orifice et le second orifice, dans ladite position de couplage.

Selon un mode de réalisation, dans la position de mise en butée, ledit dispositif porte-charge est laissé libre de pivoter suivant un second sens de rotation autour de l'axe d'articulation configuré, en cas de choc entre le dispositif porte-charge et le sol, pour pivoter selon le second sens de rotation, avec décollement de la surface de butée du châssis de la portion inférieure de la structure autoportante. De préférence, la surface de butée du châssis et la portion inférieure de la structure sont configurées pour venir en butée suivant le premier sens de rotation entre le châssis et le dispositif porte-charge, via des tampons amortisseurs élastomères fixés sur le châssis et/ou la structure autoportante, de préférence sur le châssis. De tels tampons amortisseurs permettent d'amortir les chocs inhérents à un tel fonctionnement.

Selon un mode de réalisation, les extrémités proximales du premier bras et du second bras sont fixées aux deux extrémités d'une traverse inférieure du châssis, agencée sur l'arrière du châssis, et dans lequel la surface de butée du châssis est une surface de la traverse inférieure en regard de l'espace libre entre les deux bras.

Selon un mode de réalisation, l'espace libre entre le premier bras et le deuxième bras débouche sur une ouverture arrière entre les extrémités distales des bras consistant en le premier bras et le second bras et dans lequel le dispositif porte-charge comprend la deuxième partie de couplage sur une partie avant et en hauteur de la structure autoportante du dispositif porte-charge, ainsi que des organes de roulement, agencés au moins sur une partie arrière et inférieure de la structure autoportante.

Selon un tel mode de réalisation, lesdits organes de roulement sont configurés pour être déployés en position basse et relevés en position haute par un mécanisme de relevage entre les organes de roulement et la structure autoportante de sorte que le dispositif porte-charge est configuré pour être couplé au véhicule par :
- /A/ déplacement au sol du dispositif porte-charge au travers de l'ouverture arrière, dans la position découplée du système de couplage, par roulement des organes de roulement alors en position basse, jusqu'à la mise en correspondance de la première partie de couplage et la deuxième partie de couplage,
- /B/ assemblage de la première partie de couplage et de la deuxième partie de couplage dans ladite position de couplage,
- /C/ relevage des organes de roulement provoquant le pivotement du dispositif porte-charge par rapport au châssis suivant le premier sens de rotation autour dudit axe de rotation jusqu'à mise en butée de la portion inférieure de la structure autoportante du dispositif porte-charge contre la surface de butée du châssis du véhicule.

Selon un mode de réalisation, les extrémités proximales du premier bras et du deuxième bras, d'une part, et le châssis, d'autre part, sont articulés selon un axe de pivot, transversal, de sorte que :
- le châssis présente un premier axe suivant la direction d'avance du véhicule en ligne droite sur une surface horizontale et dans lequel le système stabilisateur est pendulaire, le premier bras et le deuxième bras étant configurés pour être articulés au châssis de manière à permettre l'inclinaison du châssis dans les virages, et/ou
- ledit véhicule présente un système de suspension comprenant au moins le premier bras et le second bras articulés au châssis, de sorte que le châssis forme une partie suspendue du véhicule et la première roue arrière et la deuxième roue arrière forment des parties non suspendues du véhicules.

Selon un mode de réalisation, ledit véhicule présente ledit système de suspension comprenant le premier bras et le second bras articulés au châssis selon l'axe de pivot, ledit système de suspension comprenant, agencées au-dessus des deux bras:
- une première jambe de force présentant une extrémité inférieure reliée au premier bras et une extrémité supérieure reliée à un premier support, articulé au châssis,
- une deuxième jambe de force présentant une extrémité inférieure reliée au deuxième bras et une extrémité supérieure reliée à un deuxième support articulé au châssis,

et dans lequel le premier support et le deuxième support sont articulés au châssis en un même axe de pivot médian, le premier support et le deuxième support étant reliés par un amortisseur entretoisant le premier support et le deuxième support, et dans lequel la première partie de couplage est solidaire du châssis en une position au-dessus du système de suspension,
et dans lequel dans la position de couplage, la structure autoportante du dispositif porte-charge s'étend dans l'espace libre entre les bras, ainsi qu'au moins partiellement entre la première jambe de force et la deuxième jambe de force du système de suspension.

Selon un mode de réalisation, le véhicule comprend une selle solidaire d'une tige de selle, reçue notamment de manière réglable en hauteur dans un tube de selle du châssis du véhicule, et dans lequel la première partie de couplage est solidaire notamment par soudure au tube de selle.

Selon un mode de réalisation, le dispositif porte-charge comprend un siège passager ou une selle pour un passager, ainsi que des poignées, solidarisées à la structure, ledit dispositif porte-charge étant configuré dans la position de couplage du système de couplage pour autoriser le transport d'un passager agencé entre les bras du système stabilisateur entre la première roue et la deuxième roue du train arrière, assis sur le siège ou la selle passager, en se maintenant au poignées, avec le cas échéant le dispositif porte-charge comprenant un dispositif de réglage de la hauteur du siège passager et/ou des poignées par rapport à la structure autoportante solidaire rigidement de la deuxième partie de couplage et le cas échéant, de la portion inférieure de la structure en butée sur le châssis.

Selon un mode de réalisation, le dispositif porte-charge comprend un plancher de chargement rigidement solidaire d'une partie inférieure de la structure autoportante, le plancher étant configuré pour le chargement d'objets, ainsi que de préférence, une première séparation latérale, s'étendant en saillie du plancher, entre le premier bras et ledit plancher de chargement et une deuxième séparation latérale, s'étendant en saillie du plancher de chargement entre le deuxième bras et le plancher de chargement.

Le plancher de chargement est positionné de préférence, dans la position de couplage au moins lors d'une avance du véhicule en ligne droite, à hauteur des deux bras consistant en le premier et deuxième bras, voire positionné en hauteur en dessous des deux bras consistant en le premier et le deuxième bras.

Selon un mode de réalisation, le véhicule est un cycle dont le châssis est équipé d'un pédalier et d'une transmission entre le pédalier et les roues arrière consistant en la première roue et la deuxième roue, de préférence à assistance électrique, la transmission s'étendant pour première partie le long du premier bras et pour seconde partie le long du deuxième bras, en préservant l'espace libre entre les deux bras.

La présente divulgation est encore relative à un procédé de livraison de produits tels que d'objets ou de matières mettant en œuvre un ensemble selon la présente divulgation.

Selon une première possibilité, le procédé de livraison peut comprendre, à partir d'un état découplé du véhicule et du dispositif porte-charge dudit ensemble :
- /A1/ le chargement du dispositif porte-charge avec le ou les produits, le dispositif porte-charge étant non couplé au véhicule,
- /B1/ le couplage du dispositif porte-charge chargé en produit(s) au véhicule par couplage de la première partie de couplage et de la deuxième partie de couplage,
- /C1/ la livraison du ou des produit(s) chargé(s) sur le dispositif porte-charge couplé au véhicule, par déplacement du véhicule.

Encore et, selon une deuxième possibilité, le procédé de livraison peut comprendre, à partir d'un état couplé du véhicule et du dispositif porte-charge dudit ensemble, le procédé de livraison comprenant :
- /C1/ la livraison du ou des produit(s) chargé(s) sur le dispositif porte-charge couplé au véhicule, par déplacement du véhicule,
- /D1/ le découplage du dispositif porte-charge chargé en produit(s) du véhicule par découplage de la première partie de couplage et la deuxième partie de couplage,
- /E1/ le déchargement du ou des produits chargés sur le dispositif porte-charge, le dispositif porte-charge étant non couplé au véhicule.

Bien entendu, les deux possibilités peuvent être combinées, à savoir que le procédé de livraison peut comprendre l'ensemble des étapes /A1/, /B1/, /C1/, /D1/, /E1/.

Un tel procédé de livraison est particulièrement avantageux en ce qu'il permet d'augmenter le nombre de courses, pour le livreur et ainsi le rendement du service de livraison, en ce que les étapes /A1/ et/ou /E1/ peuvent être mises en œuvre, par des tiers, en temps masqué, alors que le véhicule est en déplacement, et en particulier en déplacement vers le dispositif porte-charge en cours de chargement s'agissant de l'étape /A1/, ou encore en déplacement pour une course suivante s'agissant de l'étape /E1/.

### Brève description des dessins

D'autres caractéristiques, détails et avantages apparaîtront à la lecture de la description détaillée ci-après, et à l'analyse des dessins annexés, sur lesquels :
**Fig. 1**

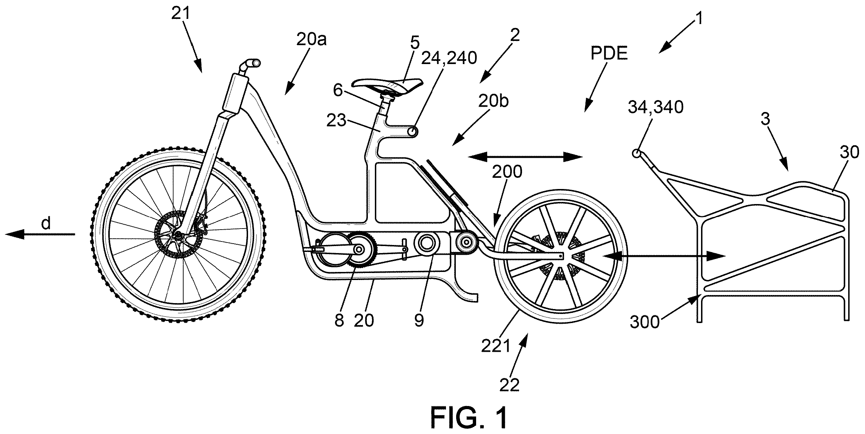

   [Fig. 1] est une vue de côté d'un ensemble selon la présente divulgation comprenant un véhicule en particulier un tricycle, et un dispositif porte-charge dans une position découplée du système de couplage entre le dispositif porte-charge et le véhicule autonome.
**Fig. 2**

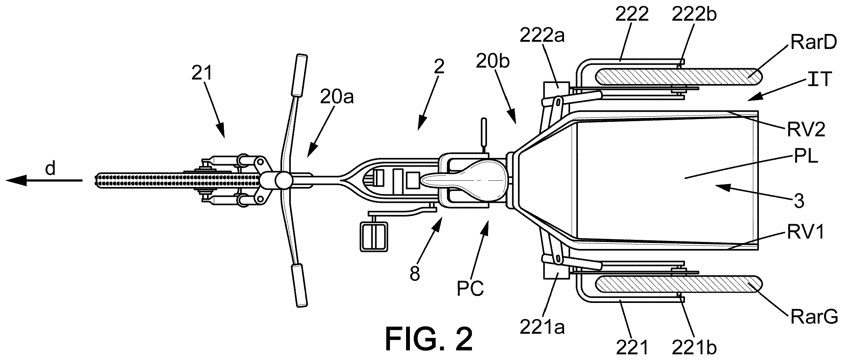

   [Fig. 2] est une vue de dessus d'un ensemble selon la figure 1 lorsque le véhicule et le dispositif porte-charge sont couplés l'un à l'autre par le système de couplage.
**Fig. 3**

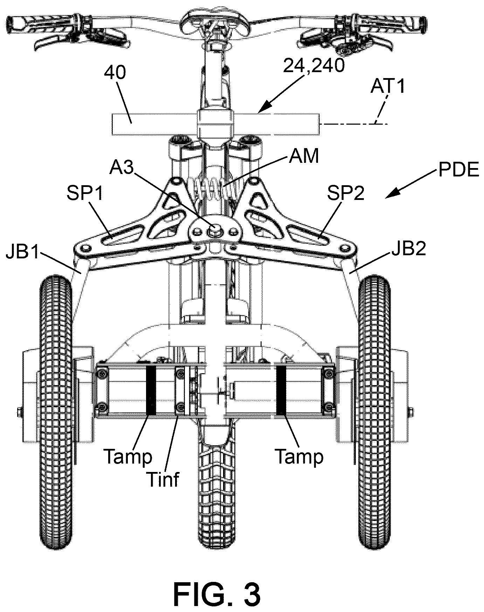

   [Fig. 3] est une vue de détail du système de suspension d'un véhicule d'un ensemble selon un deuxième mode de réalisation, qui comprend les deux bras articulés au châssis, mais encore un premier et un deuxième jambage de force, couplés à des supports et un amortisseur.
**Fig. 4**

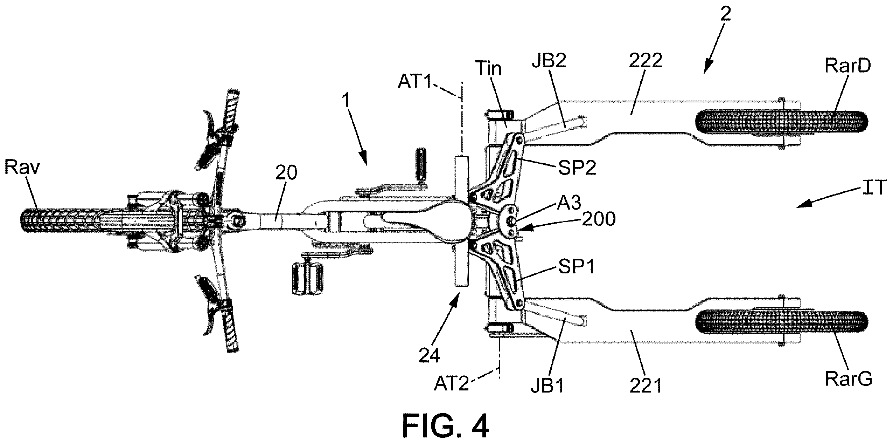

   [Fig. 4] est une vue de dessus du véhicule de la figure 3.
**Fig. 5a**

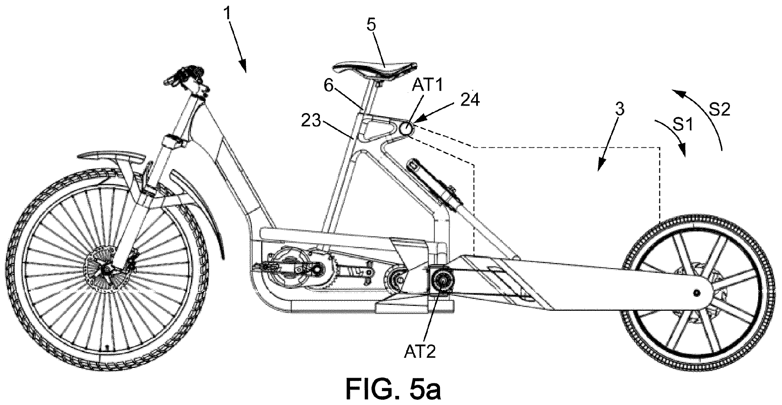

   [Fig. 5a] est une vue de côté d'un ensemble comprenant le véhicule de la figure 3, ainsi qu'un dispositif porte-charge schématisé en pointillés.
**Fig. 5b**

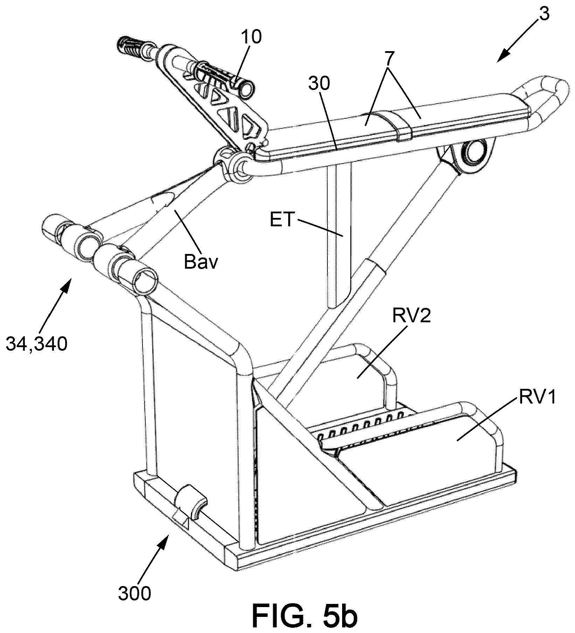

   [Fig. 5b] est une vue du dispositif porte-charge de l'ensemble de la figure 5a lorsque découplé du véhicule.
**Fig. 6a**

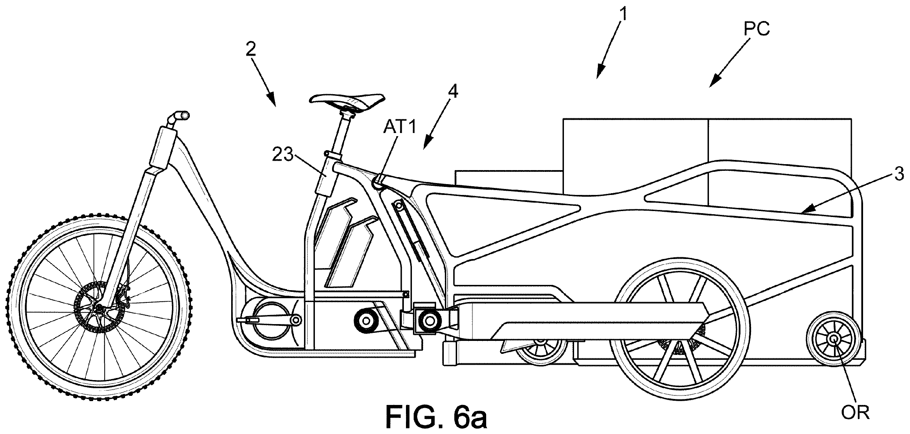

   [Fig. 6a] est une vue de côté d'un ensemble comprenant le véhicule de la figure 3, ainsi qu'un dispositif porte-charge comprenant un plancher de chargement et des parois latérales formant un réservoir de chargement entre les parois configuré pour le transport de bien.
**Fig. 6b**

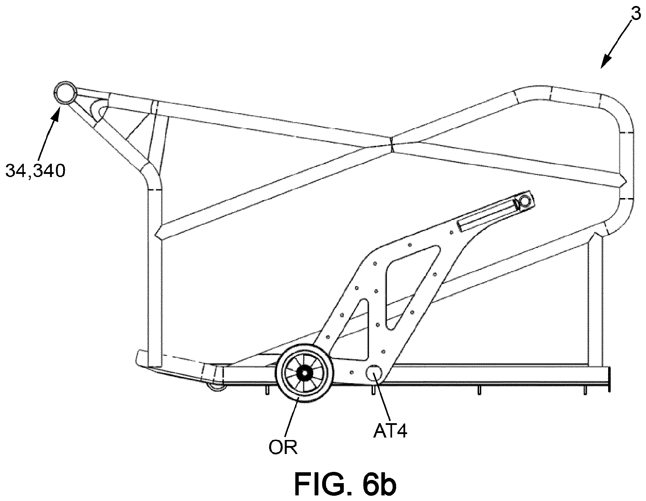

   [Fig. 6b] est une vue du dispositif porte-charge d'un ensemble similaire à celui de la figure 6a lorsque découplé du véhicule, comprenant des organes de roulements escamotables, configurés pour permettre au dispositif porte-charge d'être roulé au sol, tel un chariot en facilitant les opérations de chargement, dans la position relevée des organes de roulement
**Fig. 6c**

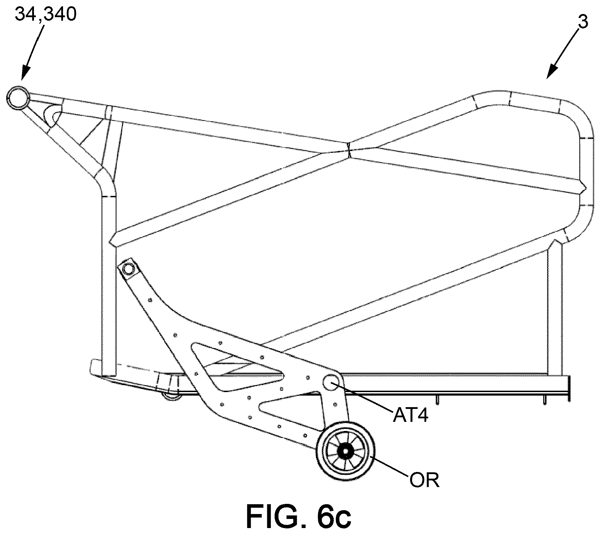

   [Fig. 6c] est une vue du dispositif porte-charge de la figure 6b, dans la position abaissée des organes de roulement, permettant de rouler le dispositif-porte-charge tel un chariot
**Fig. 7**

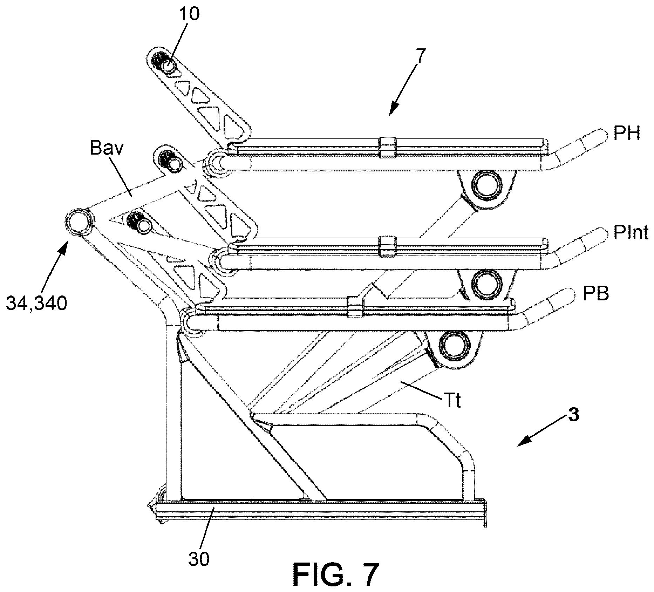

   [Fig. 7] montre un mode de réalisation d'un dispositif porte-charge configuré pour emporter un passager, comprenant une structure autoportante pourvue de poignée et d'un selle/siège de hauteur réglable en hauteur illustrant trois positions de réglage des poignées et de la selle, y compris une position haute, une position basse, ainsi qu'une position intermédiaire.
**Fig. 8a**

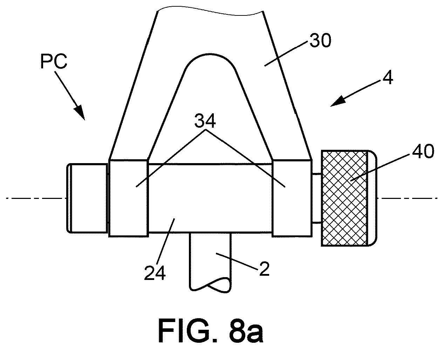

   [Fig. 8a] montre un mode de réalisation possible du système de couplage, qui assure un couplage rapide d'une première partie à une deuxième partie par insertion d'un axe d'articulation au travers de deux orifices des deux parties.
**Fig. 8b**

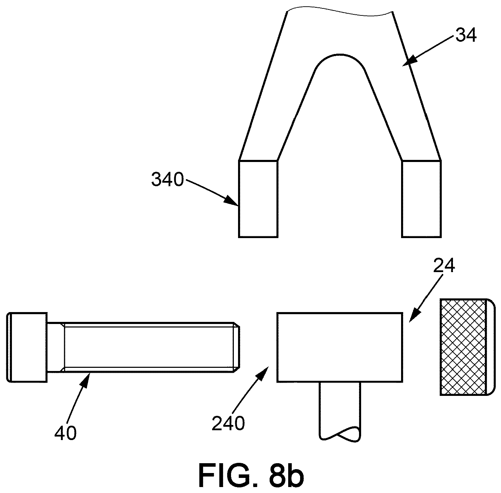

   [Fig. 8b] est une vue du système de couplage lorsque les deux parties de couplage sont dans la position découplée, obtenue après retrait de l'axe de verrouillage.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi, la présente divulgation est relative à un ensemble 1 comprenant un véhicule 2 et un dispositif porte-charge 3, monté amovible sur un châssis 20 du véhicule.

Ledit véhicule est typiquement autoportant et autonome.

On entend par autonome le fait que le véhicule reste fonctionnel, même lorsque non couplé au dispositif porte-charge 3. Le véhicule 2 peut être un véhicule léger tel qu'un cycle ou un tricycle, et en particulier un triporteur.

Le véhicule 2 comprend :
- ledit châssis 20 présentant une partie avant 20a et une partie arrière 20b, selon un sens d'avance du véhicule,
- un train avant 21 comprenant une roue avant Rav directionnelle, articulée sur la partie avant 20a du châssis,
- un train arrière 22 comprenant un système stabilisateur comprenant deux bras consistant en un premier bras 221 et un deuxième bras 222, solidaires d'une partie arrière 20b du châssis, les deux bras s'étendant parallèles entre eux au moins lorsque le véhicule avance en ligne droite sur une surface horizontale, en porte à faux arrière sur la partie arrière 20b du châssis.

Le premier bras 221 présente une extrémité proximale 221a fixée au châssis, et une extrémité distale 221b à laquelle est articulée une première roue arrière RarG, et dans lequel le deuxième bras 222 présente une extrémité proximale 222a fixée au châssis 20, et une extrémité distale 222b au niveau de laquelle est articulée une deuxième roue arrière RarD.

Le système stabilisateur est dépourvu d'essieu (ou d'autres éléments de transmission) entre la première roue RarG et la deuxième roue RarD, le premier bras 221 et le deuxième bras 222 libérant un espace libre IT entre le premier bras 221 et le deuxième bras 222, configuré pour recevoir le dispositif porte-charge 3.

La liaison entre l'extrémité proximale 221a du premier bras 221a et le châssis 20 et la liaison entre l'extrémité proximale 222a du deuxième bras 222a peut être une liaison rigide, et selon un mode de réalisation non illustré.

Selon un autre mode de réalisation notamment illustré, les extrémités proximales du premier bras 221 et du deuxième bras 222 d'une part, et le châssis 2, d'autre part, sont articulés selon un axe de pivot AT2, transversal.

Les articulations des deux bras 221, 222 autour de l'axe de pivot AT2 permettent que ledit système stabilisateur soit un système pendulaire. Autrement dit, le châssis 2 présentant un premier axe suivant la direction d d'avance du véhicule en ligne droite sur une surface horizontale, ledit système stabilisateur est pendulaire, le premier bras 3 et le deuxième bras 4 étant configurés pour être articulés au châssis de manière à permettre l'inclinaison du châssis dans les virages.

Les articulations des deux bras 221, 222 autour de l'axe de pivot AT2 peuvent encore permettre que le véhicule présente un système de suspension comprenant au moins le premier bras 221 et le second bras 222 articulés au châssis, et de sorte que le châssis 20 forme une partie suspendue du véhicule, d'une part, et la première roue RarG et la deuxième roue RarD forment des parties non suspendues du véhicules, d'autre part.

Le système pendulaire et le système de suspension peuvent être combinés, ou encore être mis en œuvre séparément l'un de l'autre, à savoir que le véhicule peut comprendre le système pendulaire sans être pourvu du système de suspension, ou inversement à savoir que le système de suspension peut être pourvu sans le système pendulaire

Selon un mode de réalisation, ledit système de suspension comprend le premier bras 221 et le second bras 222 qui sont articulés au châssis selon l'axe de pivot AT2, ledit système de suspension peut comprendre, agencées au-dessus des deux bras 221, 222:
- une première jambe de force JB1 présentant une extrémité inférieure reliée au premier bras 221 et une extrémité supérieure reliée à un premier support SP1, articulé au châssis 20,
- une deuxième jambe de force JB2 présentant une extrémité inférieure reliée au deuxième bras et une extrémité supérieure reliée à un deuxième support SP2.

Le premier support SP1 et le deuxième support SP2 sont articulés au châssis, en un même axe de pivot médian A3, le premier support SP1 et le deuxième support SP2 reliés par un amortisseur AM entretoisant le premier support SP1 et le deuxième support SP2.

Le véhicule peut être un cycle dont le châssis 20 est équipé d'un pédalier 8, et d'une transmission entre le pédalier et les roues arrière consistant en la première roue RarG et la deuxième roue RarD, de préférence à assistance électrique.

La transmission s'étend pour première partie le long du premier bras 221 et pour seconde partie le long du deuxième bras 222, en préservant l'espace libre IT entre les deux bras, et comme enseigné par FR 3 084 330.

Un poste de pilotage peut comprendre une selle 5 solidaire d'une tige de selle 6, de préférence reçue de manière réglable en hauteur dans un tube 23 de selle du châssis 2, et sur laquelle le pilote du véhicule peut s'assoir en ayant les pieds sur les pédales du pédalier.

La roue avant directionnelle peut être typiquement maintenue par une fourche, qui peut être une fourche suspendue. Le pivot de de la fourche est monté pivotant dans une douille solidaire à l'extrémité supérieure d'un tube diagonal du châssis. La fourche est couplée à un cintre du poste de pilotage, munie de poignées, voire de poignées d'un système de frein, typiquement des freins à câbles ou hydrauliques.

Ledit dispositif porte-charge 3 comprend une structure, autoportante 30. Ledit ensemble comprend un système de couplage 4, amovible, comprenant une première partie de couplage 24 du véhicule, attenante au châssis 20 du véhicule et une deuxième partie de couplage 34 du dispositif porte-charge 4 solidaire de la structure 30 du dispositif porte-charge 3.

La première partie de couplage 24 et la deuxième partie de couplage 34 sont configurées pour être assemblés, dans une position de couplage PC du système de couplage 4 pour assurer la fixation du dispositif-porte-charge 3 au châssis 20 du véhicule dans une position où la structure 30 du dispositif porte-charge 3 s'étend en porte à faux arrière du châssis 20, au moins partiellement dans l'espace libre entre les deux bras consistant en le premier bras 221 et le deuxième bras 222, de préférence entre la première roue RarG et la deuxième roue RarD. Le système de couplage assure une reprise de la charge du dispositif porte-charge 3 par le châssis 20 du véhicule 2. Le dispositif porte-charge est une partie suspendue du véhicule, avec le châssis lorsque le véhicule est pourvu du système de suspension.

La première partie de couplage 24 et la deuxième partie de couplage 34 sont encore configurées pour être désassemblées dans une position découplée PDE pour autoriser le retrait du dispositif porte-charge 3 du véhicule 2.

Selon un mode de réalisation illustré aux figures, et en particulier en détail aux figures 8a et 8b, la première partie de couplage 24 comprend un premier orifice 240 et la deuxième partie de couplage comprend un deuxième orifice 340.

Le premier orifice 240 et le deuxième orifice 340 sont configurés pour être alignés et verrouillés par un axe de verrouillage 40 du système de couplage 4, amovible, s'étendant suivant l'axe d'articulation AT1 qui est défini par la suite, traversant simultanément le premier orifice 240 et le second orifice 340, dans ladite position de couplage PC.

L'axe de verrouillage 40 peut comprendre une vis avec écrou, ou encore un axe présentant un système de verrouillage à baïonnette, ou encore une goupille, ou encore un axe de vélo à serrage rapide.

On privilégie un axe de verrouillage à verrouillage/déverrouillage rapide, pour faciliter les opérations de découplage ou de couplage du dispositif porte-charge au châssis 20 du véhicule 2. Dans un tel mode de réalisation ledit axe de verrouillage 40 peut combiner une première fonction d'organe de verrouillage et une deuxième fonction d'axe d'articulation.

De manière générale, le dispositif-porte-charge 3 peut être un dispositif configuré pour le transport d'objets ou de biens, ou encore le transport de personne.

Un ensemble peut comprendre typiquement un véhicule pourvu de la première partie de couplage 24, et un dispositif porte-charge 3 comportant la deuxième partie de couplage 34 spécifiquement pour le transport d'objets ou de matière. Un tel dispositif porte-charge 3 peut comprendre typiquement un plancher de chargement PL, pour le transport d'objets, tel qu'illustré à la figure 1 ou 2 et ou un réservoir tel qu'un bac, une caisse ; ou une citerne pour le transport de matière solide et/liquide (mode de réalisation non illustré).

Le dispositif porte-charge 3 peut encore être spécifiquement pour le transport de personnes, et comprendre des poignées 10 et un siège (ou une selle 7) sur laquelle un passager peut s'assoir en se maintenant par les poignées, et comme compréhensible à la figure 5a. Selon une telle configuration, le passager est positionné entre les bras 221 et 222, assis derrière le pilote du véhicule assis sur la selle 5. Le pilote et le passager sont de préférence assis dans le même sens.

L'ensemble selon la présente divulgation peut ainsi comprendre un (premier) dispositif porte-charge 3 spécifiquement adapté pour le transport de biens ou de matière et un (deuxième) dispositif porte-charge 3 spécifiquement adapté pour le transport de personnes. Il est ainsi possible de coupler rapidement le véhicule au premier dispositif porte-charge 3 lorsque nécessaire pour le transport de biens ou de matière, et de le remplacer par le deuxième dispositif porte-charge 3 lorsque nécessaire pour le transport de personnes.

Un tel ensemble peut ainsi être configuré rapidement pour s'adapter en fonction des besoins. Le véhicule est autonome en ce sens qu'il peut encore être utilisé lorsqu'aucun dispositif porte-charge 3 n'est couplé au véhicule à la première partie de couplage 24, ce qui peut permettre avantageusement un procédé de livraison avantageux.

Ainsi, la présente divulgation concerne également un procédé de livraison de produits tels que d'objets ou de matières mettant en œuvre un ensemble selon la présente divulgation.

Selon une première possibilité, le procédé de livraison peut comprendre, à partir d'un état découplé du véhicule et du dispositif porte-charge dudit ensemble:
- /A1/ le chargement du dispositif porte-charge 3 avec le ou les produits, le dispositif porte-charge étant non couplé au véhicule,
- /B1/ le couplage du dispositif porte-charge chargé en produit(s) au véhicule par couplage de la première partie de couplage 24 et la deuxième partie de couplage 34,
- /C1/ la livraison du ou des produit(s) chargé(s) sur le dispositif porte-charge 3 couplé au véhicule, par déplacement du véhicule.

Le chargement /A1/ est de préférence opéré par un tiers, distinct du pilote du véhicule (ci-après désigné livreur), ce qui permet de limiter le temps d'immobilisation du véhicule au temps strictement requis pour coupler le dispositif porte-charge (pré)chargé des produits en /A1/. Cet avantage permet ainsi au livreur d'effectuer un plus grand nombre de courses, par comparaison à un procédé classique où les produits seraient chargés directement sur le dispositif porte-charge alors couplé au véhicule.

Selon une deuxième possibilité à partir d'un état couplé du véhicule et du dispositif porte-charge dudit ensemble, le procédé de livraison peut comprendre :
- /C1/ la livraison du ou des produit(s) chargé(s) sur le dispositif porte-charge 3 couplé au véhicule, par déplacement du véhicule,
- /D1/ le découplage du dispositif porte-charge chargé en produit(s) du véhicule par découplage de la première partie de couplage 24 et la deuxième partie de couplage 34,
- /E1/ le déchargement du ou des produits chargés sur le dispositif porte-charge, le dispositif porte-charge non couplé au véhicule.

Le déchargement /C1/ est de préférence opéré par un tiers, distinct du pilote du véhicule (livreur), ce qui permet de limiter le temps d'immobilisation du véhicule au temps strictement requis pour découpler le dispositif porte-charge chargé des produits. Cet avantage permet ainsi au livreur d'effectuer un plus grand nombre de courses, par comparaison à un procédé classique où les produits seraient déchargés du dispositif porte-charge alors couplé au véhicule.

Bien entendu, le procédé de livraison peut comprendre les étapes /A1/, /B1/, /C1/, /D1/ et /E1/ mises en œuvre les unes à la suite des autres.

De manière générale, la première partie de couplage 24 peut être solidaire du châssis en une position au-dessus du système de suspension. Lorsque le véhicule comprend une selle 5 solidaire d'une tige de selle 6, reçue notamment de manière réglable en hauteur dans un tube de selle 23 du châssis du véhicule, la première partie de couplage 24 est de préférence solidaire notamment par soudure au tube de selle 23, saillante sur la partie arrière du tube de selle.

Lorsque le véhicule comporte le système de suspension comprenant la première jambe de force JB1 et la deuxième jambe de force JB2, au moins selon un mode de réalisation dans la position de couplage PC, la structure autoportante du dispositif porte-charge 3 s'étend dans l'espace IT entre les bras, ainsi qu'au moins partiellement entre la première jambe de force JB1 et la deuxième jambe de force JB2 du système de suspension. Les deux jambes de force sont agencées de sorte à ne pas empiéter sur l'espace libre entre les bras.

De manière générale, la première partie de couplage 24 et la deuxième partie de couplage 34 forment dans la position de couplage PC, une liaison pivot selon un axe articulation AT1 entre le châssis 20 et le dispositif porte-charge 3, qui est parallèle à l'axe d'articulation des roues arrière au moins lorsque le véhicule avance en ligne droite sur une surface horizontale.

Le dispositif porte-charge 3 est configuré pour pivoter par rapport au châssis autour de l'axe d'articulation AT1. Une telle articulation peut être mise à profit notamment pour faciliter les opérations de couplage, ou encore en cas de choc du dispositif porte-charge avec un obstacle, et comme décrit par la suite.

L'axe d'articulation AT1 entre le châssis 20 et le dispositif porte-charge 3 est agencé au-dessus du niveau des extrémités proximales 221a 222a des deux bras, consistant en le premier bras 221 et le deuxième bras 222, et ainsi au-dessus de l'axe de pivot AT2 lorsque les bras sont articulés au châssis 20, de sorte que le dispositif porte-charge 3 soit contraint par la gravité, en rotation autour de l'axe d'articulation AT1 suivant un premier sens S1 jusqu'à une position de mise en butée d'une portion inférieure 300 de la structure 30 autoportante du dispositif porte-charge 3 contre une surface de butée 200 du châssis du véhicule.

Ladite surface de butée 200 est positionnée 200 agencée en dessous de l'axe d'articulation AT1 sur le châssis 20. Les extrémités proximales 221a, 222a du premier bras 221 et du second bras 222 peuvent être fixées (notamment de manière articulée autour de l'axe de pivot AT2) aux deux extrémités d'une traverse inférieure Tinf du châssis 20 agencée sur l'arrière du châssis. La surface de butée 200 du châssis peut être une surface de la traverse inférieure Tinf en regard de l'espace libre entre les deux bras, consistant en le premier bras 221 et le deuxième bras 222.

Dans la position de mise en butée, ledit dispositif porte-charge 3 peut être avantageusement laissé libre de pivoter suivant un second sens de rotation S2 autour de l'axe d'articulation AT1 configuré, en cas de choc entre le dispositif porte-charge 3 et le sol lors du déplacement du véhicule, pour pivoter selon le second sens de rotation S2, avec décollement de la surface de butée 200 du châssis de la portion inférieure 300 de la structure autoportante.

Ainsi, en cas de choc entre une base du dispositif porte-charge 3 lorsque le véhicule 2 se déplace, par exemple, en cas de choc avec un obstacle tel qu'un trottoir, le dispositif porte-charge 3 est configuré pour pivoter dans le second sens de rotation S2, avec décollement de la surface butée de la portion inférieure 300 pour échapper à l'obstacle. Après échappement de l'obstacle, sous l'effet de la gravité, le dispositif porte-charge 3 pivote en retour autour de l'axe d'articulation AT1 selon le premier sens de rotation S1 jusqu'à la mise en butée de la surface de butée 200 et la portion inférieure 300.

Notamment dans un tel cas, la surface de butée 200 du châssis et la portion inférieure 300 de la structure sont configurées pour venir en butée suivant le premier sens de rotation S1 entre le châssis 20 et le dispositif porte-charge 3, de préférence via des tampons amortisseurs Tamp, élastomères, fixés sur le châssis 20 et/ou la structure autoportante 20, de préférence sur le châssis 20. Des tels tampons amortisseurs assurent un amortissement des chocs entre la surface de butée et la portion inférieure, inhérent à un tel fonctionnement.

Selon un autre mode de réalisation, un organe de verrouillage peut être ajouté pour interdire un tel pivotement du dispositif porte-charge selon le second sens de rotation R2.

Selon un mode de réalisation, l'espace libre IT entre le premier bras 221 et le deuxième bras 222 débouche sur une ouverture arrière entre les extrémités distales 221b, 222b des bras consistant en le premier bras 221 et le second bras 222.

Selon un mode de réalisation illustré aux figures 6a et 6b notamment, le dispositif porte-charge 3 peut comprendre la deuxième partie de couplage 34 sur une partie avant et en hauteur de la structure autoportante du dispositif porte-charge 3, ainsi que des organes de roulement OR, agencés au moins sur une partie arrière et inférieure de la structure autoportante 30.

Les organes de roulement OR, par exemple sous la forme de roulettes ; sont configurés pour être déployés en position basse pour permettre d'utiliser le dispositif porte-charge 3 tel un chariot, à savoir que le dispositif porte-charge peut être roulé au sol lorsque découplé du véhicule.

Les organes de roulement sont encore configurés pour être relevés en position haute par un mécanisme de relevage entre les organes de roulement OR et la structure autoportante 30 lorsque le dispositif porte-charge 3 est couplé au véhicule 2 de sorte que les organes de roulement soient maintenus à distance du sol lors du déplacement du véhicule.

Les figures 6b et 6c illustrent un mode de réalisation pour lequel les organes de roulement sont respectivement dans la position relevée (figure 6b), stables, et dans la position abaissée (figure 6c), stables.

Le passage d'une position jusqu'à l'autre, et inversement, peut être obtenu par pivotement d'un support de l'organe de roulement OR, par rapport à la structure autoportante 30, autour d'un axe de rotation transversale AT4. Cet axe de rotation AT4 est désaxé par rapport à l'axe de rotation de l'organe de roulement en particulier de la roulette.

Selon un tel mode de réalisation, le dispositif porte-charge 3 est configuré pour être couplé au véhicule par :
- /A/ déplacement au sol du dispositif porte-charge 3 au travers de l'ouverture arrière, dans la position découplée PDE du système de couplage, par roulement des organes de roulement OR alors en position basse, jusqu'à la mise en correspondance de la première partie de couplage 24 et la deuxième partie de couplage 34, par exemple mise en correspondance du premier orifice 240 et du deuxième orifice 340 ;
- /B/ assemblage de la première partie de couplage 24 et de la deuxième partie de couplage 34 dans ladite position de couplage PC, par exemple par insertion de l'axe de verrouillage au travers des premier et second orifices 240, 340 ;
- /C/ relevage des organes de roulement OR provoquant le pivotement du dispositif porte-charge 3 par rapport au châssis suivant le premier sens de rotation S1 jusqu'à mise en butée de la portion inférieure 300 de la structure autoportante 30 du dispositif porte-charge contre la surface de butée 200 du châssis 20 du véhicule. Dans la position relevée, les organes de roulement sont à distance du sol tel qu'illustré à la figure 6a.

On note avantageusement que le dispositif porte-charge 3 avec organes de roulement OR, facilite le procédé de livraison selon la présente divulgation, en ce qu'il facilite le couplage/découplage du dispositif de porte-charge 3 au véhicule, même lorsque chargé des produits, voire fortement chargé des produits. A aucun moment, il n'est nécessaire pour l'utilisateur de soulever le dispositif porte-charge et son chargement pour assurer les opérations de couplage.

Selon un mode de réalisation, le dispositif porte-charge 3 peut comprendre un plancher PL de chargement rigidement solidaire d'une partie inférieure de la structure autoportante 30, le plancher PL étant configuré pour le chargement d'objets sur le plancher de chargement, ainsi de préférence, une première séparation latérale RV1, s'étend en saillie du plancher PL, entre le premier bras 221 et ledit plancher de chargement PL et une deuxième séparation latérale RV2, s'étend en saillie du plancher de chargement entre le deuxième bras 222 et le plancher de chargement PL.

Selon un mode de réalisation, le plancher de chargement PL est positionné, dans la position de couplage PC au moins lors d'une avance du véhicule en ligne droite, à hauteur des deux bras consistant en le premier et deuxième bras 221, 222, voire positionné en hauteur en dessous des deux bras consistant en le premier et le deuxième bras 221, 222. Ceci permet avantageusement de descendre autant que possible le centre de gravité du chargement.

Selon un mode de réalisation, le dispositif porte-charge 3 comprend un siège passager 7 ou une selle pour un passager, ainsi que des poignées 10, solidarisés à la structure, ledit dispositif porte-charge 3 configuré dans la position de couplage PC du système de couplage pour autoriser le transport d'un passager agencé entre les bras 221, 222 du système stabilisateur entre la première roue RarG et la deuxième roue RarD du train arrière, assis sur le siège ou la selle passager, en se maintenant au poignées.

Comme illustré à titre d'exemple à la figure 7, le dispositif porte-charge 3 peut comprendre un dispositif de réglage de la hauteur du siège passager et/ou des poignées par rapport à la structure autoportante 30 solidaire rigidement de la deuxième partie de couplage 34, et le cas échéant, de la portion inférieure 300 de la structure en butée sur le châssis.

Ce dispositif de réglage de la hauteur peut comprendre :
- une première bielle avant Bav, articulée sur une portion avant d'une structure de siège 7, suivant un premier axe de rotation transversal entre la première bielle et la structure de siège, ainsi qu'à la structure autoportante 30, en une position haute autour d'un second axe de rotation transversal entre la première bielle et la structure autoportante, ce second axe transversal pouvant être confondu avec l'axe de verrouillage 40,
- une deuxième bielle Tt, arrière, télescopique comprenant deux sections télescopiques, ladite deuxième bielle articulée à la structure de siège 7 sur une portion arrière de de la structure suivant un premier axe de rotation entre la deuxième bielle et la structure de siège, et suivant un deuxième axe de rotation entre la deuxième bielle et la structure autoportante, en une position basse.

Les deux sections télescopiques de la deuxième bielle Tt, télescopiques, peuvent être réglées l'une par rapport à l'autre, suivant différentes positions, de sorte à régler la longueur de la deuxième bielle, par exemple au moyen de différentes ouvertures de réglage, destinées à être traversées par une goupille. On ajuste la longueur de la deuxième bielle par coulissement des deux sections télescopiques et on verrouille la position par insertion de la goupille au travers des ouvertures de réglage alors en regard entre les deux sections télescopiques.

Dès lors l'allongement ou le rétrécissement de la deuxième bielle permet d'obtenir différentes hauteurs de la structure de siège 7 ainsi que des poignées 10, comme notamment illustré à la figure 7, et en particulier une position haute PH, une position basse PB, ou encore une position intermédiaire PInt, de la structure de siège par rapport à la structure autoportante formant repose pieds.

Un étai ET amovible est ajouté pour assurer une bonne reprise des efforts et bloquer la structure de selle.

### Application industrielle

Les présentes solutions techniques peuvent trouver à s'appliquer notamment dans les métiers du transport de personnes et de biens, et en particulier dans le domaine de la livraison en cycles, en particulier des vélos triporteur.

### Liste des signes de référence

- 1. Ensemble,
- 2. Véhicule en particulier cycle,
- 20. Châssis,
- 20a, 20b. respectivement partie avant et partie arrière-châssis,
- 200. Surface de butée
- 21. Train avant,
- 22. Train arrière,
- 23. Tube de selle,
- 24, 34. Première partie de couplage et deuxième partie de couplage,
- 240, 340. Premier et deuxième orifices,
- 221. Premier bras
- 221a, 221b. Respectivement extrémité proximale et extrémité distale du premier bras,
- 222a, 222b. Respectivement extrémité proximale et extrémité distale du deuxième bras,
- 3. Dispositif porte-charge,
- 30. Structure autoportante,
- 300 portion inférieure (de la structure autoportante en butée contre le châssis)
- 4. Système de couplage,
- 5. Selle,
- 6. Tige de selle,
- 7. Siège (ou selle) passager
- 8. Pédalier,
- 9. Transmission,
- 10 Poignées,
- 24, 34. Respectivement première partie de couplage solidaire du châssis du véhicule et deuxième partie de couplage solidaire de la structure autoportante du dispositif porte-charge,
- AT1. Axe d'articulation transversal entre le châssis et le dispositif porte-charge,
- AT2. Axe de pivot transversal (du premier bras et du second bras sur la partie arrière du châssis),
- AT4. Axe de rotation du support (de l'organe de roulement par rapport à la structure autoportante 30, assurant le passage de l'organe de roulement d'une position haute rétractée jusqu'à une position basse déployée),
- A3. Axe médian,
- IT. Espace libre (entre le premier et le deuxième bras),
- RarG, RarD. Première roue et deuxième roue (train arrière 22),
- PC. Position de couplage,
- PDE. Position découplée,
- OR. Organe de roulement,
- S1, S2. Respectivement, premier sens de rotation (du dispositif porte-charge par rapport au châssis autour de l'axe de rotation AT1, sous l'effet de la gravité), et deuxième sens de rotation,
- d. Direction d'avance,
- Bav. Bielle avant
- Tt. Bielle télescopique
- ET. Etais

## Revendications

1. Ensemble (1) comprenant un véhicule (2)et un dispositif porte-charge (3), monté amovible sur un châssis (20) du véhicule et dans lequel ledit véhicule est un cycle et comprend :
- ledit châssis (20) comprenant une partie avant (20a) et une partie arrière (20b), selon une direction d'avance (d) du véhicule,
- un train avant (21) comprenant une roue avant (Rav) directionnelle, articulée sur la partie avant (20a) du châssis
- un train arrière (22) comprenant un système stabilisateur comprenant deux bras consistant en un premier bras (221) et un deuxième bras (222), solidaires de la partie arrière (20b) du châssis, les deux bras s'étendant parallèles entre eux, au moins lorsque le véhicule avance en ligne droite sur une surface horizontale, en porte à faux arrière sur la partie arrière (20b) du châssis
et dans lequel le premier bras (221) présente une extrémité proximale (221a) fixée au châssis, et une extrémité distale (221b) à laquelle est articulée une première roue arrière (RarG), et dans lequel le deuxième bras (222) présente une extrémité proximale (222a) fixée au châssis (20), une extrémité distale (222b) au niveau de laquelle est articulée une deuxième roue arrière (RarD),
et dans lequel le système stabilisateur est dépourvu d'essieu entre la première roue arrière (RarG) et la deuxième roue arrière (RarD), le premier bras (221) et le deuxième bras (222) libérant un espace libre (IT) entre le premier bras (221) et le deuxième bras (222), configuré pour recevoir le dispositif porte-charge (3),
et dans lequel ledit dispositif porte-charge (3) comprend une structure, autoportante (30),
et dans lequel ledit ensemble comprend un système de couplage (4), amovible, comprenant une première partie de couplage (24) du véhicule, attenante au châssis (20) du véhicule et une deuxième partie de couplage (34) du dispositif porte-charge (3) solidaire de la structure (30) du dispositif porte-charge, la première partie de couplage (24) et la deuxième partie de couplage (34) étant configurées pour être assemblées, dans une position de couplage (PC) du système de couplage (4) pour assurer la fixation du dispositif porte-charge (3) au châssis (20) du véhicule dans une position où la structure autoportante (30) du dispositif porte-charge (3) s'étend en porte à faux arrière du châssis (20), au moins partiellement dans l'espace libre entre les deux bras consistant en le premier bras (221) et le deuxième bras (222), entre la première roue arrière (RarG) et la deuxième roue arrière (RarD), avec reprise de la charge du dispositif porte-charge (3) par le châssis (20) du véhicule (2),
et dans lequel la première partie de couplage (24) et la deuxième partie de couplage (34) sont configurées pour être désassemblées dans une position découplée (PDE) pour autoriser le retrait du dispositif porte-charge du véhicule,
et dans lequel la première partie de couplage (24) et la deuxième partie de couplage (34) forment dans la position de couplage (PC), une liaison pivot selon un axe articulation (AT1) entre le châssis (20) et le dispositif porte-charge (3), qui est parallèle à l'axe d'articulation des roues arrière au moins lorsque le véhicule avance en ligne droite sur une surface horizontale, axe d'articulation (AT1) autour duquel le dispositif porte-charge (3) est configuré pour pivoter par rapport au châssis,
**caractérisé en ce que** l'axe d'articulation (AT1) entre le châssis (20) et le dispositif porte-charge (3) est agencé au-dessus du niveau des extrémités proximales des deux bras, consistant en le premier bras (221) et le deuxième bras (222) de sorte que le dispositif porte-charge (3) soit contraint par la gravité, en rotation autour de l'axe d'articulation (AT1) suivant un premier sens (S1) jusqu'à une position de mise en butée d'une portion inférieure (300) de la structure (30) autoportante du dispositif porte-charge (3) contre une surface de butée (200) du châssis du véhicule, ladite surface de butée (200) étant positionnée agencée en dessous de l'axe d'articulation (AT1) sur le châssis (20).

2. Ensemble selon la revendication 1 dans lequel la première partie de couplage (24) comprend un premier orifice (240) et la deuxième partie de couplage comprend un deuxième orifice (340), et dans lequel le premier orifice (240) et le deuxième orifice (340) sont configurés pour être alignés et verrouillés par un axe de verrouillage (40) du système de couplage (4), amovible, s'étendant suivant l'axe d'articulation (AT1), traversant simultanément le premier orifice (240) et le second orifice (340), dans ladite position de couplage (PC).

3. Ensemble selon la revendication 1 ou 2, dans lequel dans la position de mise en butée, ledit dispositif porte-charge (3) est laissé libre de pivoter suivant un second sens de rotation (S2) autour de l'axe d'articulation (AT1) configuré, en cas de choc entre le dispositif porte-charge (3) et le sol, pour pivoter selon le second sens de rotation (S2), avec décollement de la surface de butée (200) du châssis de la portion inférieure (300) de la structure autoportante, la surface de butée (200) du châssis et la portion inférieure (300) de la structure étant configurées pour venir en butée suivant le premier sens de rotation (S1) entre le châssis (20) et le dispositif porte-charge (3).

4. Ensemble selon la revendication 3, dans lequel la surface de butée (200) du châssis et la portion inférieure (300) de la structure sont configurées pour venir en butée suivant le premier sens de rotation (S1) via des tampons amortisseurs (Tamp) élastomères fixés sur le châssis (20) et/ou la structure autoportante (30), de préférence sur le châssis (20).

5. Ensemble selon l'une des revendications 1 à 4, dans lequel les extrémités proximales (221a, 222a) du premier bras (221) et du second bras (222) sont fixées aux deux extrémités d'une traverse inférieure (Tinf) du châssis (20), agencée sur l'arrière du châssis, et dans lequel la surface de butée (200) du châssis est une surface de la traverse inférieure (Tinf) en regard de l'espace libre entre les deux bras (221, 222).

6. Ensemble selon l'un des revendications 1 à 5, dans lequel l'espace libre (IT) entre le premier bras (221) et le deuxième bras (222) débouche sur une ouverture arrière entre les extrémités distales (221b, 222b) des bras consistant en le premier bras (221) et le second bras (222) et dans lequel le dispositif porte-charge (3) comprend la deuxième partie de couplage (34) sur une partie avant et en hauteur de la structure autoportante du dispositif porte-charge (3), ainsi que des organes de roulement (OR), agencés au moins sur une partie arrière et inférieure de la structure autoportante (30),
et dans lequel lesdits organes de roulement (OR) sont configurés pour être déployés en position basse et relevés en position haute par un mécanisme de relevage entre les organes de roulement (OR) et la structure autoportante (30) de sorte que le dispositif porte-charge (3) est configuré pour être couplé au véhicule par :
- /A/ déplacement au sol du dispositif porte-charge (3) au travers de l'ouverture arrière, dans la position découplée (PDE) du système de couplage, par roulement des organes de roulement (OR) alors en position basse, jusqu'à la mise en correspondance de la première partie de couplage (24) et la deuxième partie de couplage (34),
- /B/ assemblage de la première partie de couplage (24) et de la deuxième partie de couplage (34) dans ladite position de couplage (PC),
- /C/ relevage des organes de roulement (OR) provoquant le pivotement du dispositif porte-charge (3) par rapport au châssis suivant le premier sens de rotation (S1) jusqu'à mise en butée de la portion inférieure (300) de la structure autoportante (30) du dispositif porte-charge contre la surface de butée (200) du châssis (20) du véhicule.

7. Ensemble selon l'une des revendications 1 à 6 dans lequel les extrémités proximales du premier bras (221) et du deuxième bras (222), d'une part, et le châssis (2), d'autre part, sont articulés selon un axe de pivot (AT2), transversal, de sorte que :
- le châssis (2) présente un premier axe suivant la direction (d) d'avance du véhicule en ligne droite sur une surface horizontale et dans lequel le système stabilisateur est pendulaire, le premier bras (221) et le deuxième bras (222) étant configurés pour être articulés au châssis de manière à permettre l'inclinaison du châssis dans les virages, et/ou
- ledit véhicule présente un système de suspension comprenant au moins le premier bras et le second bras articulés au châssis, de sorte que le châssis (20) forme une partie suspendue du véhicule et la première roue arrière (RarG) et la deuxième roue arrière (RarD) forment des parties non suspendues du véhicule.

8. Ensemble selon la revendication 7, dans lequel ledit véhicule présente ledit système de suspension comprenant le premier bras et le second bras articulés au châssis selon l'axe de pivot (AT2), ledit système de suspension comprenant, agencées au-dessus des deux bras (221, 222) :
- une première jambe de force (JB1) présentant une extrémité inférieure reliée au premier bras (221) et une extrémité supérieure reliée à un premier support (SP1), articulé au châssis (20),
- une deuxième jambe de force (JB2) présentant une extrémité inférieure reliée au deuxième bras et une extrémité supérieure reliée à un deuxième support (SP2) articulé au châssis (20),
et dans lequel le premier support (SP1) et le deuxième support (SP2) sont articulés au châssis en un même axe de pivot médian (A3), le premier support (SP1) et le deuxième support (SP2) étant reliés par un amortisseur (AM) entretoisant le premier support (SP1) et le deuxième support (SP2),
et dans lequel la première partie de couplage (24) est solidaire du châssis en une position au-dessus du système de suspension,
et dans lequel dans la position de couplage (PC), la structure autoportante du dispositif porte-charge (3) s'étend dans l'espace libre (IT) entre les bras, ainsi qu'au moins partiellement entre la première jambe de force (JB1) et la deuxième jambe de force (JB2) du système de suspension.

9. Ensemble selon l'une des revendications 1 à 8, dans lequel le véhicule comprend une selle (5) solidaire d'une tige de selle (6), reçue de manière réglable en hauteur dans un tube de selle (23) du châssis du véhicule, et dans lequel la première partie de couplage (24) est solidaire notamment par soudure au tube de selle (23).

10. Ensemble selon l'une des revendications 1 à 9 dans lequel le dispositif porte-charge (3) comprend un siège passager ou une selle pour un passager (7), ainsi que des poignées (10), solidarisés à la structure, ledit dispositif porte-charge étant configuré dans la position de couplage (PC) du système de couplage pour autoriser le transport d'un passager agencé entre les bras (221, 222) du système stabilisateur entre la première roue et la deuxième roue du train arrière, assis sur le siège ou la selle passager, en se maintenant aux poignées, avec le cas échéant le dispositif porte-charge comprenant un dispositif de réglage de la hauteur du siège passager et/ou des poignées par rapport à la structure autoportante (30) solidaire rigidement de la deuxième partie de couplage (34) et le cas échéant, de la portion inférieure de la structure en butée sur le châssis.

11. Ensemble selon l'une des revendications 1 à 9, dans lequel le dispositif porte-charge (3) comprend un plancher (PL) de chargement rigidement solidaire d'une partie inférieure de la structure autoportante (30), le plancher (PL) étant configuré pour le chargement d'objet, ainsi que de préférence, une première séparation latérale (RV1), s'étendant en saillie du plancher (PL), entre le premier bras (221) et ledit plancher de chargement (PL) et une deuxième séparation latérale (RV2), s'étendant en saillie du plancher de chargement entre le deuxième bras (222) et le plancher de chargement (PL) et dans lequel le plancher de chargement (PL) est positionné en hauteur, dans la position de couplage (PC) au moins lors d'une avance du véhicule en ligne droite, en dessous des deux bras consistant en le premier et le deuxième bras (221, 222).

12. Ensemble selon l'une des revendications 1 à 10, dans lequel le véhicule est un cycle dont le châssis (20) est équipé d'un pédalier (8) et d'une transmission (9) entre le pédalier et les roues arrière consistant en la première roue (RarG) et la deuxième roue (RarD), de préférence à assistance électrique, la transmission s'étendant pour première partie le long du premier bras (221) et pour seconde partie le long du deuxième bras, en préservant l'espace libre (IT) entre les deux bras.

13. Procédé de livraison de produits tels que d'objets ou de matières mettant en œuvre un ensemble selon l'une des revendication 1 à 12, selon une première possibilité à partir d'un état découplé du véhicule et du dispositif porte-charge dudit ensemble, le procédé de livraison comprenant :
- /A1/ le chargement du dispositif porte-charge (3) avec le ou les produits, le dispositif porte-charge étant non couplé au véhicule,
- /B1/ le couplage du dispositif porte-charge chargé en produit(s) au véhicule par couplage de la première partie de couplage (24) et la deuxième partie de couplage (34),
- /C1/ la livraison du ou des produit(s) chargé(s) sur le dispositif porte-charge (3) couplé au véhicule, par déplacement du véhicule,
ou encore, selon une deuxième possibilité, à partir d'un état couplé du véhicule et du dispositif porte-charge dudit ensemble, le procédé de livraison comprenant :
- /C1/ la livraison du ou des produit(s) chargé(s) sur le dispositif porte-charge (3) couplé au véhicule, par déplacement du véhicule,
- /D1/ le découplage du dispositif porte-charge chargé en produit(s) du véhicule par découplage de la première partie de couplage (24) et la deuxième partie de couplage (34),
- /E1/ le déchargement du ou des produits chargés sur le dispositif porte-charge, le dispositif porte-charge (3) étant non couplé au véhicule.

## Patentansprüche

1. Anordnung (1), umfassend ein Fahrzeug (2) und eine Lastaufnahmevorrichtung (3), die abnehmbar an einem Fahrzeugrahmen (20) des Fahrzeugs angebracht ist, und wobei das Fahrzeug ein Fahrrad ist und umfasst:
- den Fahrzeugrahmen (20) mit einem vorderen Teil (20a) und einem hinteren Teil (20b) in Fahrtrichtung (d) des Fahrzeugs,
- eine Vorderradaufhängung (21) mit einem lenkbaren Vorderrad (Rav), das am vorderen Teil (20a) des Fahrzeugrahmens angelenkt ist,
- eine Hinterradaufhängung (22) mit einem Stabilisierungssystem, das zwei Arme umfasst, bestehend aus einem ersten Arm (221) und einem zweiten Arm (222), die fest mit dem hinteren Teil (20b) des Fahrzeugrahmens verbunden sind, wobei sich die beiden Arme wenigstens bei Geradeausfahrt des Fahrzeugs auf einer horizontalen Fläche am hinteren Teil (20b) des Fahrzeugrahmens freitragend parallel zueinander erstrecken,
und wobei der erste Arm (221) ein proximales Ende (221a) aufweist, das am Fahrzeugrahmen befestigt ist, und ein distales Ende (221b), an dem ein erstes Hinterrad (RarG) angelenkt ist, und wobei der zweite Arm (222) ein proximales Ende (222a) aufweist, das am Fahrzeugrahmen befestigt ist, und ein distales Ende (222b), an dem ein zweites Hinterrad (RarD) angelenkt ist,
und wobei das Stabilisierungssystem zwischen dem ersten Hinterrad (RarG) und dem zweiten Hinterrad (RarD) keine Achse aufweist, wobei der erste Arm (221) und der zweite Arm (222) einen Freiraum (IT) zwischen dem ersten Arm (221) und dem zweiten Arm (222) freigeben, der zur Aufnahme der Lastaufnahmevorrichtung (3) ausgebildet ist,
und wobei die Lastaufnahmevorrichtung (3) eine selbsttragende Struktur (30) umfasst,
und wobei die Anordnung ein lösbares Kopplungssystem (4) umfasst, umfassend ein erstes Kopplungsteil (24) des Fahrzeugs, das an den Fahrzeugrahmen (20) angrenzt, und ein zweites Kopplungsteil (34) der Lastaufnahmevorrichtung (3), das fest mit der Struktur (30) der Lastaufnahmevorrichtung verbunden ist, wobei das erste Kopplungsteil (24) und das zweite Kopplungsteil (34) derart ausgebildet sind, dass sie in einer Kopplungsstellung (PC) des Kopplungssystems (4) miteinander verbunden werden können, um die Befestigung der Lastaufnahmevorrichtung (3) am Fahrzeugrahmen (20) in einer Position zu gewährleisten, in der sich die selbsttragende Struktur (30) der Lastaufnahmevorrichtung (3) hinter dem Fahrzeugrahmen (20) freitragend erstreckt, wenigstens teilweise in den Freiraum zwischen den beiden Armen, bestehend aus dem ersten Arm (221) und dem zweiten Arm (222), zwischen dem ersten Hinterrad (RarG) und dem zweiten Hinterrad (RarD), wobei die Last der Lastaufnahmevorrichtung (3) vom Fahrzeugrahmen (20) des Fahrzeugs (2) übernommen wird,
und wobei das erste Kopplungsteil (24) und das zweite Kopplungsteil (34) derart ausgebildet sind, dass sie in einer entkoppelten Position (PDE) zerlegt werden können, um das Abnehmen der Lastaufnahmevorrichtung vom Fahrzeug zu ermöglichen,
und wobei das erste Kopplungsteil (24) und das zweite Kopplungsteil (34) in der Kopplungsposition (PC) eine Schwenkverbindung um eine Gelenkachse (AT1) zwischen dem Fahrzeugrahmen (20) und der Lastaufnahmevorrichtung (3) bilden, die wenigstens bei Geradeausfahrt des Fahrzeugs auf einer horizontalen Fläche parallel zur Schwenkachse der Hinterräder verläuft, um die die Lastaufnahmevorrichtung (3) relativ zum Fahrzeugrahmen schwenkbar ausgebildet ist,
**dadurch gekennzeichnet, dass** die Gelenkachse (AT1) zwischen dem Fahrzeugrahmen (20) und der Lastaufnahmevorrichtung (3) oberhalb der Höhe der proximalen Enden der beiden Arme, bestehend aus dem ersten Arm (221) und dem zweiten Arm (222), angeordnet ist, so dass die Lastaufnahmevorrichtung (3) durch die Schwerkraft um die Gelenkachse (AT1) in einer ersten Richtung (S1) bis zu einer Anschlagstellung eines unteren Abschnitts (300) der selbsttragenden Struktur (30) der Lastaufnahmevorrichtung (3) gegen eine Anschlagfläche (200) des Fahrzeugrahmens gedreht wird, wobei die Anschlagfläche (200) unterhalb der Gelenkachse (AT1) am Fahrzeugrahmen (20) angeordnet ist.

2. Anordnung nach Anspruch 1, wobei das erste Kopplungsteil (24) eine erste Öffnung (240) und das zweite Kopplungsteil eine zweite Öffnung (340) aufweist, und wobei die erste Öffnung (240) und die zweite Öffnung (340) derart ausgebildet sind, dass sie durch eine Verriegelungsachse (40) des Kopplungssystems (4) ausgerichtet und verriegelt werden, die entfernbar ist, sich entlang der Gelenkachse (AT1) erstreckt die gleichzeitig die erste Öffnung (240) und die zweite Öffnung (340) in der Kopplungsposition (PC) durchquert.

3. Anordnung nach Anspruch 1 oder 2, wobei in der Anschlagposition die Lastaufnahmevorrichtung (3) frei ist, in einer zweiten Drehrichtung (S2) um die Gelenkachse (AT1) zu schwenken, dazu ausgebildet, bei einem Aufprall der Lastaufnahmevorrichtung (3) auf den Boden, in der zweiten Drehrichtung (S2) zu schwenken, wobei sich die Anschlagfläche (200) des Fahrzeugrahmens vom unteren Abschnitt (300) der selbsttragenden Struktur löst, wobei die Anschlagfläche (200) des Fahrzeugrahmens und der untere Abschnitt (300) der Struktur derart ausgebildet sind, dass sie in der ersten Drehrichtung (S1) zwischen dem Fahrzeugrahmen (20) und der Lastaufnahmevorrichtung (3) in Anlage kommen.

4. Anordnung nach Anspruch 3, wobei die Anschlagfläche (200) des Fahrzeugrahmens und der untere Abschnitt (300) der Struktur derart ausgebildet sind, dass sie in der ersten Drehrichtung (S1) über elastomere Dämpfungspuffer (Tamp) in Anlage kommen, die am Fahrzeugrahmen (20) und/oder der selbsttragenden Struktur (30) befestigt sind, vorzugsweise am Fahrzeugrahmen (20).

5. Anordnung nach einem der Ansprüche 1 bis 4, wobei die proximalen Enden (221a, 222a) des ersten Arms (221) und des zweiten Arms (222) an beiden Enden eines unteren Querträgers (Tinf) des Fahrzeugrahmens (20) befestigt sind, der an der Rückseite des Fahrzeugrahmens angeordnet ist, und wobei die Anschlagfläche (200) des Fahrzeugrahmens eine Fläche des unteren Querträgers (Tinf) gegenüber dem Freiraum zwischen den beiden Armen (221, 222) ist.

6. Anordnung nach einem der Ansprüche 1 bis 5, wobei der Freiraum (IT) zwischen dem ersten Arm (221) und dem zweiten Arm (222) in eine hintere Öffnung zwischen den distalen Enden (221b, 222b) der Arme, die aus dem ersten Arm (221) und dem zweiten Arm (222) bestehen, mündet, und wobei die Lastaufnahmevorrichtung (3) das zweite Kopplungsteil (34) an einem vorderen und erhöhten Teil der selbsttragenden Struktur der Lastaufnahmevorrichtung (3) umfasst, sowie Rollelemente (OR) umfasst, die wenigstens an einem hinteren und unteren Teil der selbsttragenden Struktur (30) angeordnet sind,
und wobei die Rollelemente (OR) derart ausgebildet sind, dass sie durch einen Hebemechanismus zwischen den Rollelementen (OR) und der selbsttragenden Struktur (30) in eine niedrige Position abgesenkt und in eine hohe Position angehoben werden können, so dass die Lastaufnahmevorrichtung (3) durch folgende Bewegungen an das Fahrzeug gekoppelt werden kann:
- /A/ Verlagerung der Lastaufnahmevorrichtung (3) auf dem Boden durch die hintere Öffnung in der entkoppelten Position (PDE) des Kopplungssystems durch Rollen der dann in der unteren Position befindlichen Rollelemente (OR), bis das erste Kopplungsteil (24) und das zweite Kopplungsteil (34) ineinander greifen,
- /B/ Zusammenfügen des ersten Kopplungsteils (24) und des zweiten Kopplungsteils (34) in der genannten Kopplungsposition (PC),
- /C/ Anheben der Rollelemente (OR), wodurch die Lastaufnamevorrichtung (3) in Bezug auf den Fahrzeugrahmen in der ersten Drehrichtung (S1) gedreht wird, bis der untere Abschnitt (300) der selbsttragenden Struktur (30) der Lastaufnahmevorrichtung an der Anschlagfläche (200) des Fahrzeugrahmens (20) in Anlage kommt.

7. Anordnung nach einem der Ansprüche 1 bis 6, wobei die proximalen Enden des ersten Arms (221) und des zweiten Arms (222) einerseits und der Fahrzeugrahmen (2) andererseits um eine quer verlaufende Schwenkachse (AT2) gelenkig verbunden sind, so dass:
- der Fahrzeugrahmen (2) eine erste Achse in Fahrtrichtung (d) des Fahrzeugs in einer geraden Linie auf einer horizontalen Fläche aufweist und wobei das Stabilisierungssystem pendelnd ausgebildet ist, wobei der erste Arm (221) und der zweite Arm (222) derart ausgebildet sind, dass sie am Fahrzeugrahmen angelenkt sind, um eine Neigung des Fahrzeugrahmens in Kurven zu ermöglichen, und
- das Fahrzeug ein Aufhängungssystem aufweist, welches wenigstens den ersten Arm und den zweiten Arm umfasst, die am Fahrzeugrahmen angelenkt sind, so dass der Fahrzeugrahmen (20) einen aufgehängten Teil des Fahrzeugs bildet und das erste Hinterrad (RarG) und das zweite Hinterrad (RarD) nicht aufgehängte Teile des Fahrzeugs bilden.

8. Anordnung nach Anspruch 7, wobei das Fahrzeug das Aufhängungssystem aufweist, das den ersten Arm und den zweiten Arm umfasst, die entlang der Schwenkachse (AT2) am Fahrzeugrahmen angelenkt sind, wobei das Aufhängungssystem über den beiden Armen (221, 222) angeordnet umfasst:
- ein erstes Federbein (JB1) mit einem unteren Ende, das mit dem ersten Arm (221) verbunden ist, und einem oberen Ende, das mit einer ersten Halterung (SP1) verbunden ist, die am Fahrzeugrahmen (20) angelenkt ist,
- ein zweites Federbein (JB2) mit einem unteren Ende, das mit dem zweiten Arm verbunden ist, und einem oberen Ende, das mit einer zweiten Halterung (SP2) verbunden ist, die am Fahrzeugrahmen (20) angelenkt ist,
und wobei die erste Halterung (SP1) und die zweite Halterung (SP2) am Fahrzeugrahmen in einer gemeinsamen mittleren Schwenkachse (A3) angelenkt sind, wobei der erste Träger (SP1) und der zweite Träger (SP2) durch einen Stoßdämpfer (AM) verbunden sind, der den ersten Träger (SP1) und den zweiten Träger (SP2) aussteift,
und wobei das erste Kopplungsteil (24) in einer Position oberhalb des Aufhängungssystems fest mit dem Fahrzeugrahmen verbunden ist, und wobei sich in der Kopplungsposition (PC) die selbsttragende Struktur der Lastaufnahmevorrichtung (3) in den Freiraum (IT) zwischen den Armen sowie wenigstens teilweise zwischen dem ersten Federbein (JB1) und dem zweiten Federbein (JB2) des Aufhängungssystems erstreckt.

9. Anordnung nach einem der Ansprüche 1 bis 8, wobei das Fahrzeug einen Sattel (5) umfasst, der fest mit einer Sattelstütze (6) verbunden ist, die höhenverstellbar in einem Sattelrohr (23) des Fahrzeugrahmens aufgenommen ist, und wobei das erste Kopplungsteil (24) insbesondere durch Schweißen fest mit dem Sattelrohr (23) verbunden ist.

10. Anordnung nach einem der Ansprüche 1 bis 9, wobei die Lastaufnahmevorrichtung (3) einen Beifahrersitz oder einen Sattel für einen Beifahrer (7) sowie Griffe (10) umfasst, die mit der Struktur fest verbunden sind, wobei die Lastaufnahmevorrichtung in der Kopplungsposition (PC) des Kopplungssystems angeordnet ist, um den Transport eines Passagiers zu ermöglichen, der zwischen den Armen (221, 222) des Stabilisierungssystems zwischen dem ersten Rad und dem zweiten Rad des Hinterrads sitzt, auf dem Passagiersitz oder -sattel sitzt und sich an den Griffen festhält, wobei die Lastaufnahmevorrichtung gegebenenfalls eine Vorrichtung zum Einstellen der Höhe des Beifahrersitzes und/oder der Haltegriffe in Bezug auf die selbsttragende Struktur (30) umfasst, die fest mit dem zweiten Kopplungsteil (34) und gegebenenfalls mit dem unteren Teil der am Fahrzeugrahmen anliegenden Struktur verbunden ist.

11. Anordnung nach einem der Ansprüche 1 bis 9, wobei die Lastaufnahmevorrichtung (3) einen Ladeboden (PL) umfasst, der fest mit einem unteren Teil der selbsttragenden Struktur (30) verbunden ist, wobei der Ladeboden (PL) zum Laden von Gegenständen ausgebildet ist, sowie vorzugsweise eine erste seitliche Trennwand (RV1) umfasst, die sich von der Ladefläche (PL) zwischen dem ersten Arm (221) und der Ladefläche (PL) vorstehend erstreckt, und eine zweite seitliche Trennwand (RV2) umfasst, die sich von der Ladefläche zwischen dem zweiten Arm (222) und der Ladefläche (PL) vorstehend erstreckt, und wobei die Ladefläche (PL) in der Höhe positioniert ist in der Kopplungsposition (PC) wenigstens bei einer Geradeausfahrt des Fahrzeugs unterhalb der beiden Arme, bestehend aus dem ersten und dem zweiten Arm (221, 222).

12. Anordnung nach einem der Ansprüche 1 bis 10, wobei das Fahrzeug ein Fahrrad ist, dessen Fahrzeugrahmen (20) mit einer Tretkurbel (8) und einem Getriebe (9) versehen ist, zwischen der Tretkurbel und den Hinterrädern, bestehend aus dem ersten Rad (RarG) und dem zweiten Rad (RarD), vorzugsweise mit elektrischer Unterstützung, wobei sich das Getriebe zum ersten Teil entlang des ersten Arms (221) und zum zweiten Teil entlang des zweiten Arms erstreckt, wobei der Freiraum (IT) zwischen den beiden Armen erhalten bleibt.

13. Verfahren zum Ausliefern von Produkten wie Gegenständen oder Materialien unter Verwendung einer Anordnung gemäß einem der Ansprüche 1 bis 12, gemäß einer ersten Möglichkeit aus einem Zustand, in dem das Fahrzeug und die Lastaufnahmevorrichtung der Anordnung voneinander getrennt sind, wobei das Auslieferverfahren umfasst:
- /A1/ das Beladen der Lastaufnahmevorrichtung (3) mit dem oder den Produkten, wobei die Lastaufnahmevorrichtung nicht mit dem Fahrzeug gekoppelt ist,
- /B1/ das Koppeln der mit dem oder den Produkten beladenen Lastaufnahmevorrichtung an das Fahrzeug durch Koppeln des ersten Kopplungsteils (24) und des zweiten Kopplungsteils (34),
- /C1/ die Lieferung des oder der auf die mit dem Fahrzeug gekoppelte Lastaufnahmevorrichtung (3) geladenen Produkts/Produkte durch Bewegen des Fahrzeugs oder, als zweite Möglichkeit, aus einem gekoppelten Zustand des Fahrzeugs und der Lastaufnahmevorrichtung der genannten Einheit, wobei das Lieferverfahren umfasst:
- /C1/ die Lieferung des oder der auf die mit dem Fahrzeug gekoppelte Lastaufnahmevorrichtung (3) geladenen Produkts/Produkte durch Bewegen des Fahrzeugs,
- /D1/ das Abkoppeln der mit dem/den Produkt(en) beladenen Lastaufnahmevorrichtung vom Fahrzeug durch Abkoppeln des ersten Kopplungsteils (24) und des zweiten Kopplungsteils (34),
- /E1/ das Entladen des/der auf die Lastaufnahmevorrichtung geladenen Produkts/Produkte, wobei die Lastaufnahmevorrichtung (3) nicht mit dem Fahrzeug gekoppelt ist.

## Claims

1. Assembly (1) comprising a vehicle (2) and a load-carrying device (3), mounted removably on a frame (20) of the vehicle and wherein said vehicle is a cycle and comprises:
- said frame (20) comprising a front part (20a) and a rear part (20b), in a direction of travel (d) of the vehicle,
- a front end (21) comprising a steerable front wheel (Rav), articulated on the front part (20a) of the frame
- a rear end (22) comprising a stabiliser system comprising two arms consisting of a first arm (221) and a second arm (222), integral with the rear part (20b) of the frame, the two arms extending parallel to each other, at least when the vehicle rides in a straight line on a horizontal surface, in a rear overhang from the rear part (20b) of the frame
and wherein the first arm (221) has a proximal end (221a) attached to the frame 15, and a distal end (221b) to which a first rear wheel (RarG) is articulated, and wherein the second arm (222) has a proximal end (222a) attached to the frame (20), and a distal end (222b) at which a second rear wheel (RarD) is articulated, and wherein the stabiliser system has no axle between the first rear wheel 20 (RarG) and the second rear wheel (RarD), the first arm (221) and the second arm (222) leaving a free space (IT) between the first arm (221) and the second arm (222), configured to receive the load-carrying device (3), and wherein said load-carrying device (3) comprises a self-supporting structure (30),
and wherein said assembly comprises a removable coupling system (4), comprising a first coupling part (24) of the vehicle, adjoining the frame (20) of the vehicle and a second coupling part (34) of the load-carrying device (3) integral with the structure (30) of the load-carrying device, the first coupling part (24) and the second coupling part (34) being configured to be assembled, in a coupling position (PC) of the coupling system (4) to secure the attachment of the load-carrying device (3) to the frame (20) of the vehicle in a position where the self-supporting structure (30) of the load-carrying device (3) extends as a rear overhang from the frame (20), at least partially in the free space between the two arms consisting of the first arm (221) and the second arm (222), between the first rear wheel (RarG) and the second rear wheel (RarD), with the load of the load-carrying device (3) being taken up by the frame (20) the vehicle (2),
and wherein the first coupling part (24) and the second coupling part (34) are configured to be disassembled in a decoupled position (PDE) to allow removal of the load-carrying device from the vehicle,
and wherein the first coupling part (24) and the second coupling part (34) form in the coupling position (PC), a pivot connection along a pivot axis (AT1) between the frame (20) and the load-carrying device (3), which is parallel to the pivot axis of the rear wheels at least when the vehicle rides in a straight line on a horizontal surface, pivot axis (AT1) around which the load-carrying device (3) is configured to pivot relative to the frame,
**characterised in that** the pivot axis (AT1) between the frame (20) and the load-carrying device (3) is arranged above the level of the proximal ends of the two arms, consisting of the first arm (221) and the second arm (222) so that the load-carrying device (3) is forced by gravity to rotate about the pivot axis (AT1) in a first direction (S1) as far as a position in which a lower portion (300) of the self-supporting structure (30) of the load-carrying device (3) is brought into abutment against an abutment surface (200) of the frame of the vehicle, said abutment surface (200) being positioned below the hinge axis (AT1) on the frame (20).

2. Assembly according to Claim 1, wherein the first coupling part (24) comprises a first orifice (240) and the second coupling part comprises a second orifice (340), and wherein the first orifice (240) and the second orifice (340) are configured to be aligned and locked by a locking pin (40) of the removable coupling system (4), extending along the hinge axis (AT1), simultaneously passing through the first orifice (240) and the second orifice (340), in said coupling position (PC).

3. Assembly according to Claim 1 or 2, wherein in the abutment position, said load-carrying device (3) is left free to pivot in a second direction of rotation (S2) about the hinge axis (AT1) configured, in the event of impact between the load-carrying device (3) and the ground, to pivot in the second direction of rotation (S2), with separation of the abutment surface (200) of the frame from the lower portion (300) of the self-supporting structure, the abutment surface (200) of the frame and the lower portion (300) of the structure being configured to abut in the first direction of rotation (S1) between the frame (20) and the load-carrying device (3).

4. Assembly according to Claim 3, wherein the abutment surface (200) of the frame and the lower portion (300) of the structure are configured to abut in the first direction of rotation (S1) via elastomeric shock absorbers (Tamp) attached to the frame (20) and/or the self-supporting structure (30), preferably to the frame (20).

5. Assembly according to one of Claims 1 to 4, wherein the proximal ends (221a, 222a) of the first arm (221) and the second arm (222) are attached to both ends of a lower cross member (Tinf) of the frame (20), arranged on the rear of the frame, and wherein the abutment surface (200) of the frame is a surface of the lower cross member (Tinf) facing the free space between the two arms (221, 222).

6. Assembly according to one of Claims 1 to 5, wherein the free space (IT) between the first arm (221) and the second arm (222) leads to a rear opening between the distal ends (221b, 222b) of the arms consisting of the first arm (221) and the second arm (222) and wherein the load-carrying device (3) comprises the second coupling part (34) on a front and high part of the self-supporting structure of the load-carrying device (3), as well as the rolling members (OR), arranged at least on a rear and lower part of the self-supporting structure (30),
and wherein said rolling members (OR) are configured to be deployed in a low position and raised in a high position by a lifting mechanism between the rolling members (OR) and the self-supporting structure (30) such that the load-bearing device (3) is configured to be coupled to the vehicle by:
- /A/ moving the load-carrying device (3) on the ground through the rear opening, in the decoupled position (PDE) of the coupling system, by rolling the rolling members (OR) which are in the low position, until the first coupling part (24) and the second coupling part (34) come into alignment,
- /B/ assembling the first coupling part (24) and the second coupling part (34) in said coupling position (PC),
- /C/ raising the rolling members (OR) causing the load-carrying device (3) to pivot with respect to the frame in the first direction of rotation (S1) until the lower portion (300) of the self-supporting structure (30) of the load-carrying device abuts against the abutment surface (200) of the frame (20) of the vehicle.

7. Assembly according to one of Claims 1 to 6, wherein the proximal ends of the first arm (221) and the second arm (222), on the one hand, and the frame (2), on the other hand, are articulated about a transverse pivot axis (AT2), such that:
- the frame (2) has a first axis in the direction (d) of travel of the vehicle in a straight line on a horizontal surface and wherein the stabiliser system is pendular, the first arm (221) and the second arm (222) being configured to be articulated to the frame so as to allow the tilting of the frame when cornering, and/or
- said vehicle has a suspension system comprising at least the first arm and the second arm articulated to the frame, such that the frame (20) forms a suspended part of the vehicle and the first rear wheel (RarG) and the second rear wheel (RarD) form non-suspended parts of the vehicle.

8. Assembly according to Claim 7, wherein said vehicle has said suspension system comprising the first arm and the second arm articulated to the frame along the pivot axis (AT2), said suspension system comprising, arranged above the two arms (221, 222):
- a first strut (JB1) having a lower end connected to the first arm (221) and an upper end connected to a first support (SP1), articulated to the frame (20),
- a second strut (JB2) having a lower end connected to the second arm and an upper end connected to a second support (SP2) articulated to the frame (20),
and wherein the first support (SP1) and the second support (SP2) are articulated to the frame on the same median pivot axis (A3), the first support (SP1) and the second support (SP2) being connected by a damper (AM) bracing the first support (SP1) and the second support (SP2),
and wherein the first coupling part (24) is integral with the frame in a position above the suspension system,
and wherein in the coupling position (PC), the self-supporting structure of the load-carrying device (3) extends into the free space (IT) between the arms, as well as at least partially between the first strut (JB1) and the second strut (JB2) of the suspension system.

9. Assembly according to one of Claims 1 to 8, wherein the vehicle comprises a seat (5) integral with a seatpost (6), received in a height-adjustable manner in a seat tube (23) of the vehicle frame, and wherein the first coupling part (24) is secured in particular by welding to the seat tube (23).

10. Assembly according to one of Claims 1 to 9, wherein the load-carrying device (3) comprises a passenger seat or a saddle for a passenger (7), as well as handles (10), secured to the structure, said load-carrying device being configured in the coupling position (PC) of the coupling system to allow the transport of a passenger arranged between the arms (221, 222) of the stabiliser system between the first wheel and the second wheel of the rear end, seated on the passenger seat or saddle, holding on to the handles, with, where applicable, the load-carrying device comprising a device for adjusting the height of the passenger seat and/or the handles with respect to the self-supporting structure (30) rigidly secured to the second coupling part (34) and, where applicable, to the lower portion of the structure abutting on the frame.

11. Assembly according to one of Claims 1 to 9, wherein the load-carrying device (3) comprises a loading floor (PL) rigidly secured to a lower part of the self-supporting structure (30), the floor (PL) being configured for loading objects, as well as preferably a first lateral separation (RV1), extending protruding from the floor (PL), between the first arm (221) and said loading floor (PL) and a second lateral separation (RV2), extending protruding from the loading floor between the second arm (222) and the loading floor (PL) and wherein the loading floor (PL) is positioned vertically, in the coupling position (PC) at least during a forward movement of the vehicle in a straight line, below the two arms consisting of the first and second arms (221, 222).

12. Assembly according to one of Claims 1 to 10, wherein the vehicle is a cycle whose frame (20) is equipped with a crankset (8) and a transmission (9) between the crankset and the rear wheels consisting of the first wheel (RarG) and the second wheel (RarD), preferably with electrical assistance, the transmission extending for the first part along the first arm (221) and for the second part along the second arm, preserving the free space (IT) between the two arms.

13. Method for delivering products such as objects or materials using an assembly according to one of Claims 1 to 12, according to a first possibility from a decoupled state of the vehicle and the load-carrying device of said assembly, the delivery method comprising:
- /A1/loading the load-carrying device (3) with the product(s), the load-carrying device not being coupled to the vehicle,
- /B1/coupling the load-carrying device loaded with product(s) to the vehicle by coupling the first coupling part (24) and the second coupling part (34),
- /C1/delivering the product(s) loaded on the load-carrying device (3) coupled to the vehicle, by moving the vehicle,
or, according to a second possibility, from a coupled state of the vehicle and the load-carrying device of said assembly, the delivery method comprising:
- /C1/delivering the product(s) loaded on the load-carrying device (3) coupled to the vehicle, by moving the vehicle,
- /D1/decoupling the load-carrying device loaded with product(s) from the vehicle by decoupling the first coupling part (24) and the second coupling part (34),
- /E1/unloading the product(s) loaded on the load-carrying device, the load-carrying device (3) not being coupled to the vehicle.
